# EUROPEAN PATENT SPECIFICATION

(11) **EP 1 142 453 B1**
(45) Date of publication and mention of the grant of the patent: **28.04.2004**
(21) Application number: 00911163.4
(22) Date of filing: 07.01.2000
(51) Int. Cl.: H05B 41/00

(54) **KIT FOR CONVERTING LIGHTING UNITS EMPLOYING FLUORESCENT LAMPS FROM INDUCTIVE OPERATION TO ELECTRONIC OPERATION**
BAUSATZ ZUM UMSETZEN VON LEUCHTSTOFFLEUCHTE VON INDUKTIVEN IN ELEKTRONISCHEN BETRIEB
KIT POUR FAIRE PASSER DES UNITES D'ECLAIRAGE UTILISANT DES LAMPES FLUORESCENTES DU MODE INDUCTION AU MODE ELECTRONIQUE

(30) Priority: 12.01.1999 DE 19900889; 17.03.1999 US 271480
(43) Date of publication of application: 10.10.2001
(73) Proprietor: Asian Electronics, Ltd., Thane 400 604 (IN)
(72) Inventor: SHAH, Suresh, H., Mumbai 400 020, Maharashtre (IN)
(74) Representative: Barendregt, Frank, Drs.
(86) International application number: PCT/IB2000/000355
(87) International publication number: WO 2000/041495

(56) References cited:
- WO-A-00/21342
- US-A- 4 414 489
- US-A- 5 260 678
- US-A- 5 440 466
- US-A- 5 597 233
- US-A- 5 854 542

## Description

### Background Of The Invention

The type of lighting that is most widespread worldwide is the straight fluorescent lamp, with electrical contacts on both sides, which can be found today in all offices, factories, hospitals, etc Although in the course of the last ten years it has been determined that the operation of these gas discharge lamps, which employ simple chokes in order to limit the current of the gas discharge, is not the optimum solution, uncounted millions of lamps of this type are in use today.

The disadvantages consist in that in the operation of lamps at the customary power frequency of 50 or 60 Hz, the light flickers at this frequency and stroboscopic effects can occur, which, for example, cause running machines to appear to be stopped. Also, the efficiency of these "inductive" fluorescent lamp ballasts is not satisfactory. The efficiency of the physical conversion of the at first invisible gas discharge into visible light can be considerably improved by a modern electronic device operating at high frequency. For equivalent light efficiency, a significant energy savings can be obtained in the process. This is not only a cost factor, but also an obligation in preserving natural resources and the environment.

Of course, the conversion of inductive lamps to electronic high frequency operation is not only a question of the cost of a fluorescent lamp ballast; although such a conversion may be viewed as technically and economically advisable, the expense in installation work associated with such a change prevents a rapid conversion.

US-A-5 440 466 discloses a retrofit kit for converting lighting units from inductive operation to electronic operation according to the preambles of claims 1, 4 and 10.

### Summary Of The Invention

The purpose of the present invention is to provide a simple and cost-effective solution which makes possible the replacement of fluorescent lamps in existing lighting units while simultaneously converting to electronic highfrequency operation, in a cost effective manner and with minimal or no installation work.

This is achieved by providing a kit in which the structural components of the electronic ballast can be housed in a single adapter, or divided into two adapters, which can be attached on the ends of the gas discharge tubes. This results in only a slight enlargement of the overall length of the fluorescent lamp, which, given the modern miniaturization of electronic components, can be achieved without difficulties.

In order to prevent a rebuilding of the lighting units and change of the wiring inside the lighting units, it is further proposed to arrange the electrical connections necessary for a flawless function between the two adapters, attachable to the greatest extent possible on the adapters and covered in a cable channel.

Another variation of the invention provides for housing the structural components of the electronic ballast either only in the cable channel or housing parts of them in the adapters.

According to the invention, it is also proposed that on the cable channel, reflector wings are arranged which not only reinforce the cable channel, but also with minimal added costs, introduce a considerable improvement in the re-radiation of light. One additional advantage of housing the electronic ballast in the cable channel is that additional cooling of the structural components can be achieved through the reflector wings.

Since this involves a retrofitting kit, a savings can be achieved in at least one connection line between the adapters. In lieu of an added electrical wire or line, the connection lines to the starter holder -- always present in lighting units with inductive systems -- can be utilized as an element of the circuit. Instead of the starter, an additional bypass adapter is used in the starter holder The bypass adapter shunts the connections of the starter holder, either with a fuse, a temperature-dependent PTC resistor, or a combination thereof, and thus creates an electrical connection between the adapters. The combination of a fuse with a PTC resistor is preferred

Since the length of the fluorescent lamps is established as a worldwide standard, it is further proposed according to the invention, to design the length of the adapters in such a way that the length of the fluorescent lamps, including the adapters, corresponds to standard lengths, and thus the fluorescent lamps with adapters according to the invention can readily be inserted into existing standardized lamp sockets or lighting fixtures.

### Brief Description Of The Drawings

The following detailed description of the invention is supported by the schematically described embodiment examples, which function only for better understanding and are to be evaluated in no way as a restriction of the range of protection of the invention.
Fig. 1 shows for better understanding as an example, a traditional arrangement with a choke (9) as the inductive ballast;
Fig. 2 depicts the design of a shortened fluorescent lamp according to the invention, having two additional adapters (4) and (5) set on the ends which contain the structural components of the electronic ballast (20);
Fig. 3 shows a view of a construction according to the invention in which the fluorescent lamp has already been installed in the left adapter, however, the right adapter has not yet been placed. The line channel is divided in the middle and connected to the adapters;
Fig. 3a shows a section A-A of Fig. 3;
Fig. 4 shows a view of an alternative solution, however, with a line channel, which is provided with two reflector wings and arranged between the adapters;
Fig. 4a shows a section B-B of Fig. 4;
Fig. 5 shows a variation of the invention in which the electronic ballast is arranged in the line channel (6);
Fig. 6 is an exploded view of the apparatus of Fig. 5 which shows the separate parts of the kit prior to the assembly;
Fig. 7 is a schematic representation of the apparatus of Figs. 5 and 6; and
Fig. 8 shows a section C-C of Fig. 7.

### Detailed Description Of A Preferred Embodiment

The following detailed schematic description functions for the understanding of the invention concept, however, it can not depict this exhaustively since uncounted construction variations both in the design, as well as in the functional construction, are possible.

First, a traditional lamp is depicted in Fig. I, having a fluorescent lamp (1) of the type used until now, which is inserted in two brackets (2) and has its current limited inductively by a choke (9). A so-called "starter" (3) provides for a surge to cause the ignition of the gas discharge, only after a certain pre-heating time of the electrodes (8). The fluorescent lamp (1), with its heated electrodes (8), is supplied with voltage from a power network (15) or (16) via spring-finger contacts (12) and contact pins (11). The starter (3) is connected to the electrodes (8) via lines (13). When a lamp is switched-on, and power is first supplied to the lamp circuit, starter (3) supplies a higher heating current to the electrodes (8) in order to facilitate the subsequent ignition operation of the gas discharge. The time delay is accomplished mostly by use of a heated bimetallic strip whose function is not reliable. In electronic ballast devices, pre-heating is controlled by electronic circuits and thus considerably more reliable.

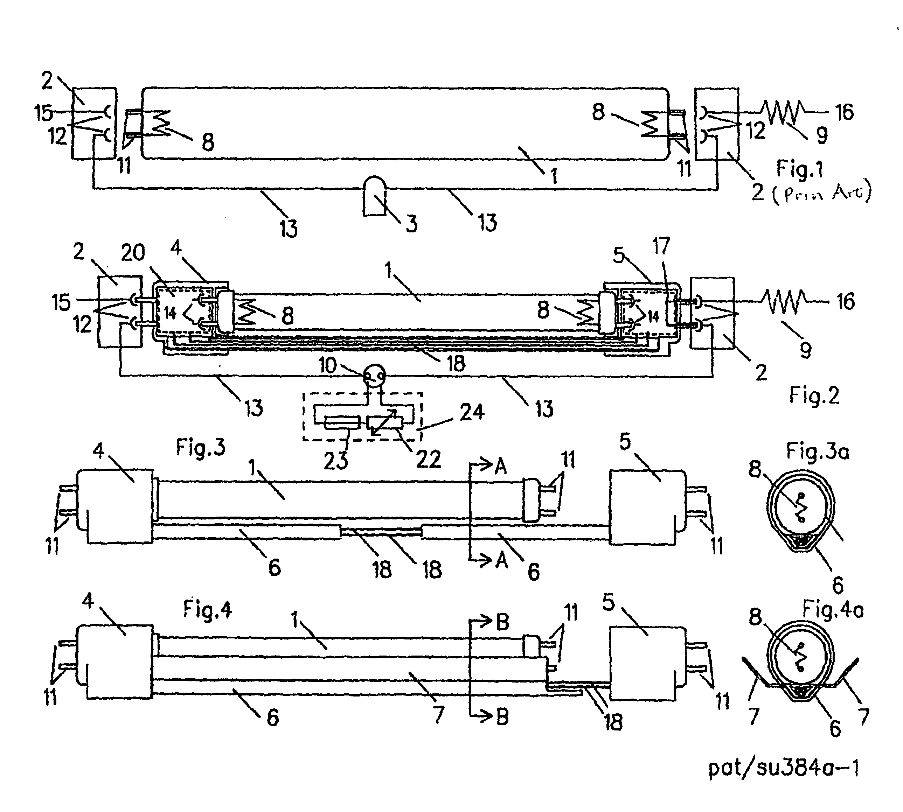

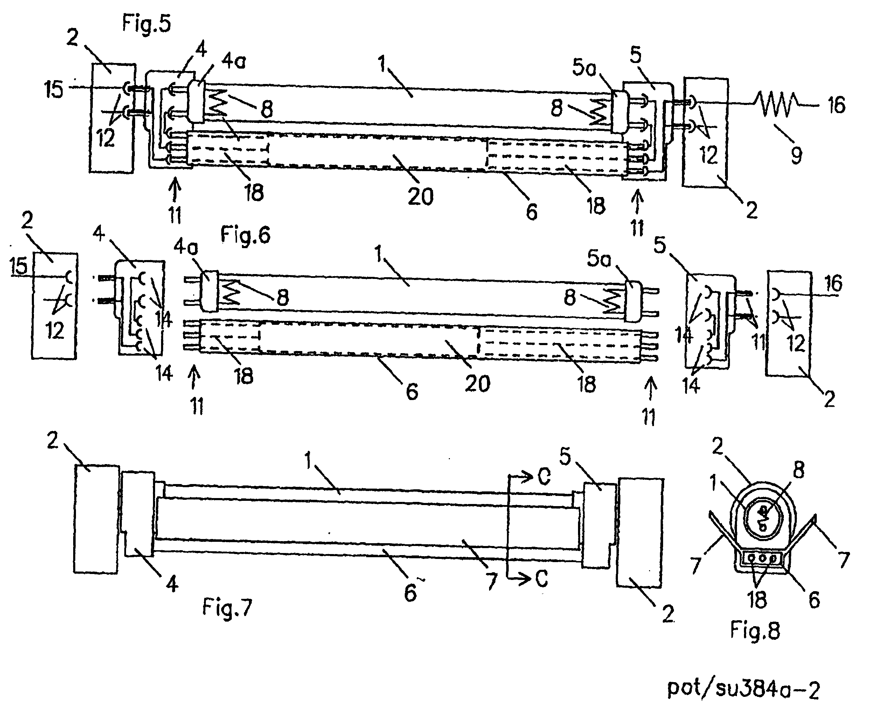

Referring now to Figs. 2 and 5, examples of designs according to the invention are described schematically: Fluorescent lamp (1) has a pair of sockets (4a) and (5a) which are attached to adapters (4) and (5) in brackets (2) on each side of a lighting unit. Contact pins (11) and allocated, recessed internal spring-finger contacts (14) provide for the electrical connection of electrodes (8) of the fluorescent lamp (1) with the adapters (4) and (5), or with the spring-finger contacts (12) in the sockets (2).

The adapters (4) and (5) are connected to each other through connection lines ( 18) which, as depicted in Fig. 5, lie in a line channel (6). The structural components of an electronic ballast (20) can either be provided within adapter (4) only, or parts of the ballast can reside in adapter (5).

In order to save a connection line (18), wires or lines (13) that are always installed in the existing lighting units can be used in order to supply the power voltage (16). An electrical pathway is provided through the elastic contacts (12) of the right bracket (2), via the starter holder, to the left bracket (2) and thus to the ballast (20) in the adapter (4). To accomplish this, it is only necessary to by-pass the contacts of the starter holder (10).

The by-pass of the contacts of the starter holder (10) does not occur in an ill-considered manner with a shorting clamp, but instead via a protective resistor (22) or via a fuse (23) which are housed in a by-pass adapter (24), which can be inserted into a starter holder (10). Use of a temperature-dependent PTC resistor as protective resistor (22) has the advantage of limiting the inrush current; however, this type of resistor consumes power constantly and in case of an electrical disturbance, no switch-off occurs. A fuse (23) in holder (10) provides complete safety; however fuse (10) does not limit the making (switch-on) current. In some cases, a combination of both functions can be desired, as depicted by the series connection of resistor (22) and fuse (23) in Fig. 2. Since this involves a simple, inexpensive structural component as an accessory, all desires can be selectively met according to the invention and applied exchangeably as desired.

Of course, it is at first not known which spring-finger contacts (14) conduct the power supply voltage in the bracket and which lead to the starter through the lines (13). Since the voltage from the power network (16) must be supplied to the ballast (20) and in this way to the fluorescent lamp (1), and because the starter (3) is no longer necessary, the two contact pins (11) located on the right adapter (5) can readily be connected with a shorting bar (17), and in this way the required connection from the power network (16) is reliably achieved via the by-pass adapter (24) to the ballast (20) in the adapter (4).

If it is desired to not use the existing lines of the lighting unit and the starter holder (10), the problem of supplying power to ballast (20) can also be solved with an additional connection line (18) between the adapters (4) and (5).

The choke (9), connected in series with the power network (16), has no special effect on the electronic operation of the lamp; it can even cause an additional contribution to disturbance of the function. If desired, it can removed or by-passed.

Fig. 3 is a view of a complete kit, with fluorescent lamp (1) already inserted into the adapter (4), but before the placement of the adapter (5). For this purpose, the centrally divided halves of the line channel (6) are not yet plugged together and the two connection lines (18) can still be seen. Both parts of the line channel (6) could, of course, also slide into each other in a telescoping manner in order to allow a simpler handling. After the plugging in of the adapter (5) on the contact pins (11) of the fluorescent lamp (1), the entire unit can be inserted into the brackets (2) of the lighting unit and the lighting unit is thus converted to electronic operation. In the example of Fig. 3, the parts of the line channel (6) are firmly connected to the adapters (4) or (5), which should be taken into account in manufacturing of the parts from plastic.

The variation of Fig. 4 shows an undivided line channel (6) which is, moreover, provided with reflector surfaces (7) and thus gains considerably in stability. In the section B-B in Fig. 4a, this can be clearly recognized. In Fig. 4, the right adapter (5) is also not yet placed and here as well, the two connection lines (18) are seen.

If one wishes to further economize the assembly, the embodiments of Figs. 5 to Fig. 8 may be appropriate. The embodiment schematically shown in Fig. 5 is particularly simple in construction and east to manufacture.

In the embodiment of Fig. 5. all parts of the electronic ballast are housed in the line channel (6), which are adapted to mate with contact pins (11) in the adapters (4) and (5), on both sides. All parts of Fig. 5 are provided with the same reference numbers and have the same functions as described in the other drawings.

Fig. 6 depicts both the fluorescent lamp (1) as well as the adapters (4) and (5) before being assembled, in order to better show the individual parts. The extremely simple design can be seen clearly here. One additional advantage is that the electronic ballast (20) can be adapted to different operating voltages and outputs, simply by replacing the line channel (6). No loose wires, no screws or other connecting mechanisms are necessary. The complete kit, shown in assembled condition in Fig. 7, can be applied in any antiquated lighting unit having an inductive ballast, and brings the advantages mentioned at the beginning.

## Claims

1. A kit for converting lighting units with straight fluorescent lamps (1) having sockets on both sides, from inductive operation to electronic operation, **characterized in that** two socket adapters (4, 5), which can be attached to the contact pins (11) of the fluorescent lamps (1), are present and the structural components of the electronic ballast (20) are arranged in one of the adapters, or divided in both adapters, and that electric connections (18) are provided between the adapters.

2. A kit according to claim 1, **characterized in that** the electric connections (18) between the adapters (4, 5) can be attached to these adapters.

3. A kit according to claim 1, **characterized in that** the electric connections (18) between the adapters (4, 5) are arranged in an attachable line channel (6).

4. A kit for converting lighting units with straight fluorescent lamps (1) having sockets (4a, 5a) on both sides, from inductive operation to electronic operation, **characterized in that** two socket adapters (4, 5), which can be attached to the contact pins (11) of the fluorescent lamps (1), are present and the structural components of the electronic ballast (20) are arranged in an attachable line channel (6) that connects the adapters (4, 5) mechanically and electrically.

5. A kit according to claim 4, **characterized in that** the structural components of the electronic ballast (20) are arranged both in the line channel (6) as well as in one or two adapters.

6. A kit according to claim 4, **characterized in that** at least all of the essential structural components of the electronic ballast (20) determining the voltage and the power are arranged in the line channel (6).

7. A kit according to claim 4, **characterized in that** the cable channel (6) has reflector surfaces (7).

8. A kit according to claim 4, **characterized in that** an additional by-pass adapter (24) that can be inserted into the starter holder (10) is present which contains a protective resistor (22) and/or a fuse (23), and with these structural components, by-passes the supply lines (13) to the starter holder present in the lighting unit, such that in one of the adapters (4, 5) attached to the fluorescent lamp, the two contact pins arranged on the adapter are by-passed.

9. A kit according to claim 4, **characterized in that** the length of the fluorescent lamp (1) with the attached adapter (4, 5) corresponds to a standardized length of a fluorescent lamp so that it can be interchanged.

10. A kit for converting lighting units from inductive operation to electronic operation comprising:
a) a straight fluorescent lamp (1) having at least two contact pins (11) at each end of the lamp;
**characterized in that** the kit further comprises
b) first and second adapters (4, 5) for mounting to the ends of the lamp (1), each said adapter having a pair of internal contacts (14) for mating with said lamp contact pins (11), and each said adapter (4, 5) having a pair of external contact pins (11) for mating with contacts in a lighting fixture;
c) connection lines (18) for electrically connecting said first adapter to said second adaptor; and
d) an electronic ballast (20).

11. A kit in accordance with claim 10 wherein said electronic ballast is mounted in said first adapter.

12. A kit in accordance with claim 10 wherein said connection lines (18) are in a line channel (6).

13. A kit in accordance with claim 12 wherein said electronic ballast (20) is mounted in said line channel (6).

14. A kit in accordance with claim 12 wherein said line channel (6) contains a bypass adapter (24).

15. The kit of claim 14 wherein said bypass adapter (24) comprises a resistor (22) and a fuse (23).

16. The kit of claim 15 wherein said resistor (22) comprises a PTC resistor.

17. A kit according to claim 10 wherein elements of said electronic ballast (20) are mounted in said first adapter and in said second adapter.

18. A kit in accordance with claim 12 wherein said line channel (6) comprises two telescoping elements.

19. A kit in accordance with claim 12 wherein said line channel (6) has a plurality of outwardly-extending contact pins (11) at each end of said channel, and said first and second adapters (4, 5) have internal contacts (14) for mating with said channel contact pins (11).

## Patentansprüche

1. Bausatz zum Umstellen von Beleuchtungseinheiten mit geraden Leuchtstofflampen (1) mit Fassungen auf beiden Seiten von induktivem Betrieb auf elektronischen Betrieb, **dadurch gekennzeichnet, dass** zwei Fassungs-Adapter (4, 5), die an den Kontaktstiften (11) der Leuchtstofflampen (1) angebracht werden können, vorhanden sind und die Bauteile des elektronischen Vorschaltgerätes (20) in einem der Adapter angeordnet oder auf beide Adapter verteilt sind, und dass elektrische Verbindungen (28) zwischen den Adaptern vorhanden sind.

2. Bausatz nach Anspruch 1, **dadurch gekennzeichnet, dass** die elektrischen Verbindungen (18) zwischen den Adaptern (4, 5) an diesen Adaptern angebracht werden können.

3. Bausatz nach Anspruch 1, **dadurch gekennzeichnet, dass** die elektrischen Verbindungen (18) zwischen den Adaptern (4, 5) in einem anbringbaren Leitungskanal (6) angeordnet sind.

4. Bausatz zum Umstellen von Beleuchtungseinheiten mit geraden Leuchtstofflampen (1) mit Fassungen (4a, 5a) auf beiden Seiten von induktivem Betrieb auf elektronischen Betrieb, **dadurch gekennzeichnet, dass** zwei Fassungs-Adapter (4, 5), die an den Kontaktstiften (11) der Leuchtstofflampen (1) angebracht werden können, vorhanden sind und die Bauteile des elektronischen Vorschaltgerätes (20) in einem anbringbaren Leitungskanal (6) angeordnet sind, der die Adapter (4, 5) mechanisch und elektrisch verbindet.

5. Bausatz nach Anspruch 4, **dadurch gekennzeichnet, dass** die Bauteile des elektronischen Vorschaltgerätes (20) beide in den Leitungskanälen (6) sowie in einem oder zwei Adaptern angeordnet sind.

6. Bausatz nach Anspruch 4, **dadurch gekennzeichnet, dass** wenigstens alle wichtigen Bauteile des elektronischen Vorschaltgerätes (20), die die Spannung und die Leistung bestimmen, in dem Leitungskanal (6) angeordnet sind.

7. Bausatz nach Anspruch 4, **dadurch gekennzeichnet, dass** der Kabelkanal (6) Reflektorflächen (7) aufweist.

8. Bausatz nach Anspruch 4, **dadurch gekennzeichnet, dass** ein zusätzlicher Umgehungs-Adapter (24), der in die Starterfassung (10) eingeführt werden kann, vorhanden ist, der einen Schutzwiderstand (22) und/oder eine Sicherung (23) enthält und mit diesen Bauteilen die Versorgungsleitungen (13) zu der Starterfassung umgeht, die in der Beleuchtungseinheit vorhanden sind, so dass in einem der Adapter (4, 5), der an der Leuchtstofflampe angebracht ist, die zwei Kontaktstifte, die an dem Adapter angeordnet sind, umgangen werden.

9. Bausatz nach Anspruch 4, **dadurch gekennzeichnet, dass** die Länge der Leuchtstofflampe (1) mit dem daran angebrachten Adapter (4, 5) einer Standard-Länge einer Leuchtstofflampe entspricht, so dass sie ausgewechselt werden kann.

10. Bausatz zum Umstellen von Beleuchtungseinheiten von induktivem Betrieb auf elektronischen Betrieb, der umfasst:
a) eine gerade Leuchtstofflampe (1) mit wenigstens zwei Kontaktstiften (11) an jedem Ende der Lampe;
**dadurch gekennzeichnet, dass** der Bausatz des Weiteren umfasst:
b) einen ersten und einen zweiten Adapter (4, 5) zum Anbringen an den Enden der Lampe (1), wobei jeder der Adapter ein Paar innerer Kontakte (14) zum Eingriff mit den Lampen-Kontaktstiften (11) aufweist und jeder der Adapter (4, 5) ein Paar äußerer Kontakte (11) zum Eingriff mit Kontakten in einem Beleuchtungskörper aufweist;
c) Verbindungsleitungen (18), die den ersten Adapter elektrisch mit dem zweiten Adapter verbinden; und
d) ein elektronisches Vorschaltgerät (20).

11. Bausatz nach Anspruch 10, wobei das elektronische Vorschaltgerät in dem ersten Adapter angebracht ist.

12. Bausatz nach Anspruch 10, wobei sich die Verbindungsleitungen (18) in einem Leitungskanal (6) befinden.

13. Bausatz nach Anspruch 12, wobei sich das elektronische Vorschaltgerät (20) in dem Leitungskanal (6) angebracht ist.

14. Bausatz nach Anspruch 12, wobei der Leitungskanal (6) einen Umgehungs-Adapter (24) enthält.

15. Bausatz nach Anspruch 14, wobei der Umgehungs-Adapter (24) einen Widerstand (22) und eine Sicherung (23) umfasst.

16. Bausatz nach Anspruch 15, wobei der Widerstand (22) einen PTC-Widerstand umfasst.

17. Bausatz nach Anspruch 10, wobei Elemente des elektronischen Vorschaltgerätes (20) in dem ersten Adapter und in dem zweiten Adapter angebracht sind.

18. Bausatz nach Anspruch 12, wobei der Leitungskanal (6) zwei Teleskopelemente umfasst.

19. Bausatz nach Anspruch 12, wobei der Leitungskanal (6) eine Vielzahl sich nach außen erstreckender Kontaktstifte (11) an jedem Ende des Kanals aufweist und der erste sowie der zweite Adapter (4, 5) innere Kontakte (14) zum Eingriff mit den Kanal-Kontaktstiften (11) aufweisen.

## Revendications

1. Kit de conversion de luminaires présentant des lampes fluorescentes directes (1) possédant des douilles des deux côtés, d'un fonctionnement inductif à un fonctionnement électronique, **caractérisé par** la présence de deux adaptateurs de douille (4, 5) qui peuvent être fixés aux broches de contact (11) de la lampe fluorescente (1) et en ce que des composants structurels du ballast électronique (20) sont disposés dans l'un des adaptateurs ou partagés entre les deux adaptateurs et en ce que des connexions électriques (18) sont pourvues entre les adaptateurs.

2. Kit selon la revendication 1, **caractérisé en ce que** les connexions électriques (18) entre les adaptateurs (4, 5) peuvent être fixées à ces adaptateurs.

3. Kit selon la revendication 1, **caractérisé en ce que** les connexions électriques (18) entre les adaptateurs (4, 5) sont disposées dans un guide de lignes (6) amovible.

4. Kit de conversion de luminaires présentant des lampes fluorescentes directes (1) possédant des douilles (4a, 5a) des deux côtés, d'un fonctionnement inductif à un fonctionnement électronique, **caractérisé par** la présence de deux adaptateurs de douille (4, 5) qui peuvent être fixées aux broches de contact (11) de la lampe fluorescente (1) et en ce que des composants structurels du ballast électronique (20) sont disposés dans un guide de lignes amovible (6) qui relie les adaptateurs (4, 5) mécaniquement et électriquement.

5. Kit selon la revendication 4, **caractérisé en ce que** les composants structurels du ballast électronique (20) sont disposés à la fois dans le guide de lignes (6) et dans un ou deux adaptateurs.

6. Kit selon la revendication 4, **caractérisé en ce qu'**au moins tous les composants structurels essentiels du ballast électronique (20) déterminant la puissance et la tension sont disposés dans le guide de lignes (6).

7. Kit selon la revendication 4, **caractérisé en ce que** le guide de lignes (6) présente des surfaces de réflexion (7).

8. Kit selon la revendication 4, **caractérisé en ce qu'**un adaptateur de contournement (24) supplémentaire pouvant être inséré dans le support de démarreur (10) est présent, qui comprend une résistance de protection (27) et/ou un fusible (23) et qui avec ces composants structurels contourne les lignes d'alimentation (13) au support de démarreur présent dans le luminaire, de manière à ce que dans un des adaptateurs (4, 5) fixé à la lampe fluorescente, les deux broches de contact disposées sur l'adaptateur soient contournées.

9. Kit selon la revendication 4, **caractérisé en ce que** la longueur de la lampe fluorescente (1) avec les adaptateurs fixés (4, 5) correspond à la longueur normalisée d'une lampe fluorescente de manière à être interchangeable.

10. Kit destiné à convertir les luminaires d'un fonctionnement inductif à un fonctionnement électronique, comprenant :
a) une lampe fluorescente droite (1) présentant au moins deux broches de contact à chaque extrémité ; **caractérisé en ce que** le kit comprend en outre :
b) des premier et second adaptateurs (4, 5) destinés à être montés aux extrémités de la lampe (1), chacun desdits adaptateurs présentant un couple de contacts internes (14) pour correspondre avec lesdites broches de contact (11) et que chacun desdits adaptateurs (4, 5) présentant un couple de broches de contact extérieures (11) pour correspondre aux contacts dans le luminaire ;
c) des lignes de connexion (18) pour relier électriquement ledit premier adaptateur audit second adaptateur ; et
d) un ballaste électronique (20).

11. Kit selon la revendication 10, dans lequel ledit ballast électronique est fixé dans ledit premier adaptateur.

12. Kit selon la revendication 10, dans lequel lesdites lignes de connexion (18) sont disposées dans un guide de lignes (6).

13. Kit selon la revendication 12, dans lequel ledit ballaste électronique (20) est disposé dans ledit guide de lignes (6).

14. Kit selon la revendication 12, dans lequel ledit guide de lignes (6) contient un adaptateur de contournement (24).

15. Kit selon la revendication 14, dans lequel ledit adaptateur de contournement (24) comprend une résistance (22) et un fusible (23).

16. Kit selon la revendication 15, dans lequel ladite résistance (22) comprend une résistance CTP.

17. Kit selon la revendication 10, dans lequel des éléments dudit ballast électronique (20) sont fixés dans ledit premier adaptateur et dans ledit second adaptateur.

18. Kit selon la revendication 12, dans lequel ledit guide de lignes (6) comprend deux éléments télescopiques.

19. Kit selon la revendication 12, dans lequel ledit guide de lignes (6) présente une pluralité de broches de contact s'étendant vers l'extérieur (11), à chaque extrémité dudit guide et lesdits premier et second adaptateurs (4, 5) présentent des contacts intérieurs (14) pour correspondre aux dites broches de contact de guide.
